# EUROPÄISCHE PATENTSCHRIFT

(11) **EP 0 629 148 B1**
(45) Veröffentlichungstag und Bekanntmachung des Hinweises auf die Patenterteilung: **27.12.1996**
(21) Anmeldenummer: 93905297.3
(22) Anmeldetag: 04.03.1993
(51) Int. Cl.: B23K 1/015

(54) **TRANSPORTVORRICHTUNG UND -VERFAHREN FÜR EINE DAMPFPHASENLÖTANLAGE**
TRANSPORT DEVICE AND PROCESS FOR A VAPOUR-PHASE SOLDERING INSTALLATION
DISPOSITIF ET PROCEDE DE TRANSPORT POUR UNE INSTALLATION DE BRASAGE EN PHASE VAPEUR

(30) Priorität: 06.03.1992 DE 4207166
(43) Veröffentlichungstag der Anmeldung: 21.12.1994
(73) Patentinhaber: LEICHT, Helmut, Walter, D-86343 Königsbrunn (DE)
(72) Erfinder: LEICHT, Helmut, Walter, D-86343 Königsbrunn (DE)
(74) Vertreter: VOSSIUS & PARTNER
(86) Internationale Anmeldenummer: EP9300493
(87) Internationale Veröffentlichungsnummer: WO9317824

(56) Entgegenhaltungen:
- US-A- 4 634 000
- US-A- 4 897 934

## Beschreibung

Die Erfindung betrifft eine Transportvorrichtung und ein Transportverfahren zum Beschicken und Ausgeben von Lötgut in einer Dampfphasenlötanlage.

Ein wichtiges Kriterium für eine Dampfphasenlötanlage ist die Minimierung des Austritts von Lötdampf, da die entsprechenden chemischen Substanzen sehr kostenaufwendig sind.

Im Stand der Technik wird daher ein großer Aufwand getrieben, um die Verluste der Dampfphasenlötanlagen niedrig zu halten. Einen bedeutenden Einfluß darauf hat das Transportsystem des Lötgutes, da bei der Ein- und Ausfahrt des Lötgutes in die bzw. aus der Anlage Lötdämpfe austreten können.

Im Idealfall sollte das Transportsystem einer Dampfphasenlötanlage einen ruckfreien Transport des Lötgutes mit horizontaler und vertikaler Bewegung und eine waagrechte Lage des Lötgutes gewährleisten sowie den Austritt von Lötdämpfen verhindern.

Die DE-C-39 15 046 offenbart eine Ketten-Fördervorrichtung für bestückte Leiterplatten oder Baugruppen in einer Dampfphasenlötanlage. Die Vorrichtung ist in drei gesonderte Förderbahnabschnitte unterteilt, die einen Lötgutträger, an Ketten hängend, waagrecht transportieren. Der erste Abschnitt fördert das Lötgut aus der Umgebung in die Lötanlage, der zweite Abschnitt transportiert es durch die Lötanlage, wo das Lötgut gelötet wird, und der dritte Abschnitt befördert das gelötete Lötgut wieder aus der Lötanlage heraus. Dabei ist ein längerer Transportweg mit Übergangsstellen zwischen den Förderabschnitten vorgesehen. Die Fördervorrichtung ist für den Durchlauf großer Stückzahlen geeignet, hat eine aufwendige Konstruktion und verhindert, insbesondere durch die Unterteilung in mehrere Förderabschnitte, daß wesentliche Mengen von Lötmedium beim Transport des Lötguts die Anlage verlassen.

Ein solches System ist jedoch mit bedeutenden Kosten verbunden, die für kleinere Anwender oder für Laboranwendungen zu hoch sind, und gewährleistet auch keinen völlig ruckfreien Transport des Lötgutes.

Aus der US-A-4,634,000, die dem Oberbegriff des Anspruchs 1 entspricht, ist eine Dampfphasenlötanlage bekannt, bei der die Werkstückträger über ein Führungsschienensystem in horizontaler Lage durch die Lötanlage transportiert werden. Dabei wird das vordere Ende des Wirkstückträgers in einem ersten Schienenpaar und das hintere Ende des Werkstückträgers in einem zweiten Schienenpaar geführt, wobei die beiden Schienenpaar entsprechend der gewünschten Transportstrecke geformt sind.

Aus der US-A-4,897,934 ist eine Dampfphasen-Durchlauflötanlage mit Verschlußklappen bekannt.

Demgegenüber liegt der Erfindung die Aufgabe zugrunde, eine Transportvorrichtung und ein Transportverfahren für Dampfphasenlötanlagen zur Verfügung zu stellen, die die oben erwähnten Anforderungen erfüllen aber einfach und kostengünstig sind.

Diese Aufgabe wird mit den Merkmalen der Patentansprüche gelöst.

Bei der Lösung geht die Erfindung von dem Grundgedanken aus, den Lötgutträger beim Ein- und Ausfahren in die Dampfphasenlötanlage um eine Achse zu schwenken und dabei die ursprüngliche Richtung (meist waagrecht) des Lötgutträgers aufrecht zu erhalten. In einer bevorzugten erfindungsgemäßen Ausführungsform wird der Lötgutträger als eine Seite eines Parallelogramms ausgebildet, und drei Seiten des Parallelogramms werden um die Eckpunkte der vierten Seite gedreht. Dabei bleibt die Richtung der Ebene des Lötgutträgers in allen Drehstellungen erhalten und gewährleistet, wenn es gewünscht wird, eine waagrechte Lage des Lötgutes während des Transportes und beim Eintauchen in einen Mediumbehälter, in dem der Lötvorgang stattfindet. Vorzugsweise verhindern eine, bevorzugt zwei Abdichtklappen, im Transportweg des Lötgutträgers, die sich wechselweise öffnen und schließen, sowohl beim Beschicken als auch beim Ausgeben des Lötgutes, daß der Mediumbehälter in direkte Verbindung mit der Umgebung außerhalb der Lötanlage kommt und somit Lötdämpfe austreten können.

Die Vorteile der Erfindung liegen in einem völlig ruckfreien Transport des Lötgutes, der gleichbleibenden Lage des Lötgutes, einem geringen Platzbedarf und der Einschränkung von Lotdampfverlusten. Außerdem erlaubt die einfache Bauweise eine sehr kostengünstige Herstellung der Transportvorrichtung.

Im folgenden wird die Erfindung anhand der Zeichnungen näher erläutert. Es zeigen:
- Fig. 1: einen Querschnitt einer Dampfphasenlötanlage mit einer erfindungsgemäßen Ausführungsform ohne Abdichtklappen,
- Fig. 2: eine Draufsicht auf die erfindungsgemäße Ausführungsform gemäß Fig. 1,
- Fig. 3a: einen Querschnitt einer Dampfphasenlötanlage mit einer erfindungsgemäßen Ausführungsform mit Abdichtklappen,
- Fig. 3b: drei Stellungen der ersten Abdichtklappe und des Lötgutträgers gemäß Fig. 3a beim Einfahren des Lötgutträgers, und
- Fig. 3c: drei Stellungen der zweiten Abdichtklappe und des Lötgutträgers gemäß Fig. 3a beim Einfahren des Lötgutträgers.

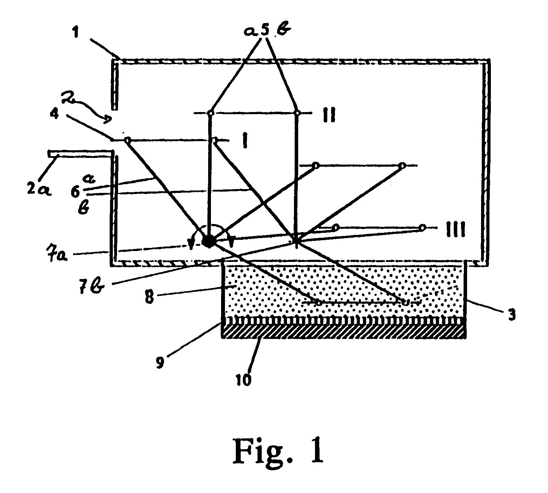

Fig. 1 zeigt eine erfindungsgemäße Transportvorrichtung 4, 5a, b, 6a, b und 7a, b in einer Dampfphasenlötanlage bestehend aus einem Gehäuse 1, einer Öffnung 2 mit einer Öffnungsklappe 2a und einem Mediumbehälter 3, in dem der Lötvorgang stattfindet. Der Mediumbehälter 3 enthält das Lötmedium in der Dampfphase 8, das mittels der Heizung 10 aus der Flüssigkeit 9 erzeugt wird. Die Transportvorrichtung besteht aus einem Lötgutträger 4 und einer Transporteinheit, die Streben 6a und 6b aufweist. Der Lötgutträger 4 ist in Lagern 5a und 5b mit den oberen Enden der Streben 6a bzw. 6b drehbar verbunden. Die Streben 6a und 6b, die zusammen einen Halter und eine Stabilisiereinrichtung für den Lötgutträger 4 ausbilden, sind an ihren unteren Enden mit einer Antriebswelle 7a bzw. einer Lagerwelle 7b drehbar verbunden. Der Lötgutträger 4, die Streben 6a und 6b und die gedachte Verbindungslinie zwischen den Wellen 7a und 7b bilden ein Parallelogramm aus, so daß bei der Drehung der Streben 6a und 6b um die Antriebswelle 7a bzw. die Lagerwelle 7b der Lötgutträger 4 nur parallel zur Ausgangsstellung versetzt wird. Auf diese Weise ist die Lage des Lötguts während des Transports und des Lötvorgangs gleichbleibend. Die Vorrichtung transportiert das Lötgut ruckfrei. Sie kann an beliebigen Stellen gestoppt werden, um z.B. Vorheiz- oder Kühlvorgänge durchzuführen.

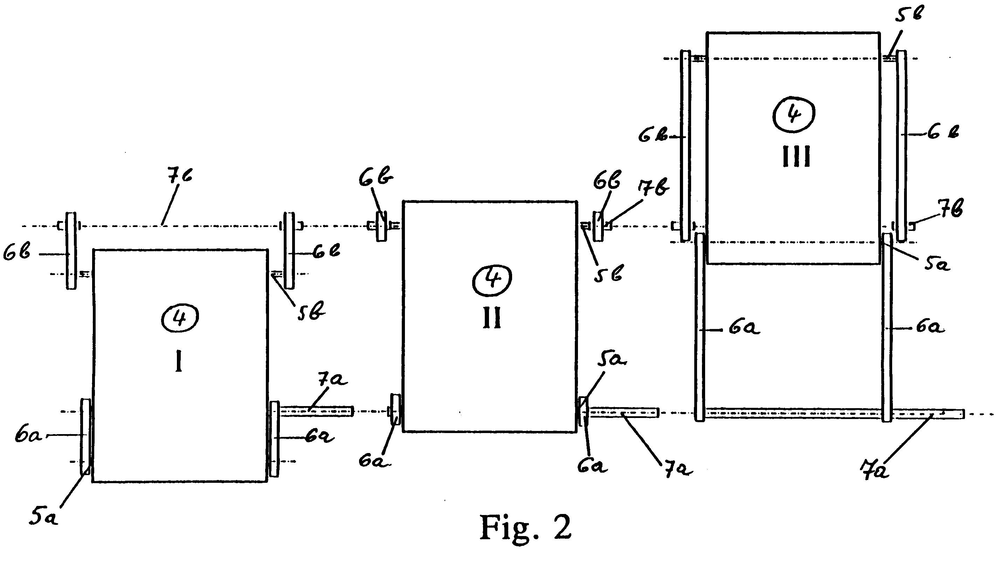

Fig. 2 zeigt eine Draufsicht auf die Transportvorrichtung gemäß Fig. 1 in drei Stellungen I, II und III, die den entsprechenden Stellungen in Fig. 1 entsprechen. In allen Stellungen bleibt in diesem Beispiel die waagerechte Lage des Lötgutträgers 4 erhalten. Es besteht aber auch die Möglichkeit, den Lötgutträger 4 in einer leichten Schräglage zu transportierten, um z.B. das Abfließen von kondensiertem Lötmedium zu gewährleisten.

Die Streben 6a und 6b können als gerade Stäbe oder gebogen ausgebildet sein.

Es ist ferner möglich, die erfindungsgemäße Transportvorrichtung auf einem Schlitten zu montieren, um sie horizontal zu bewegen, so daß der Lötgutträger 4 eine langgestreckte Ellipsenbahn beschreibt.

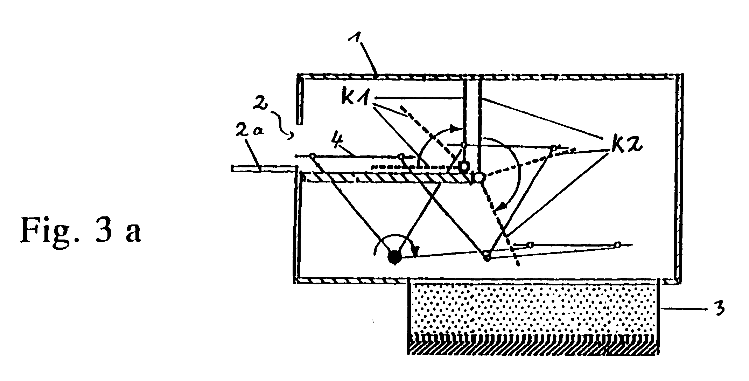

Fig. 3a zeigt die erfindungsgemäße Transportvorrichtung mit zwei Abdichtklappen K1 und K2. Diese sind hinter der Öffnung 2 mit der Öffnungsklappe 2a im Transportweg des Lötgutträgers 4 hintereinander angeordnet. Die Abdichtklappe K1 ist um einen Winkel von 90° schwenkbar, während der Schwenkwinkel der Abdichtklappe K2 größer 90° ist. Die Abdichtklappen dichten das Gehäuse 1 wechselweise gegen entweichende Lötdämpfe ab, wenn der Lötgutträger 4 die entsprechenden Öffnungen der Abdichtklappen durchfahren hat. Die Abdichtklappen öffnen und schließen kontinuierlich, anschließend an die Bewegung des Lötgutträgers 4.

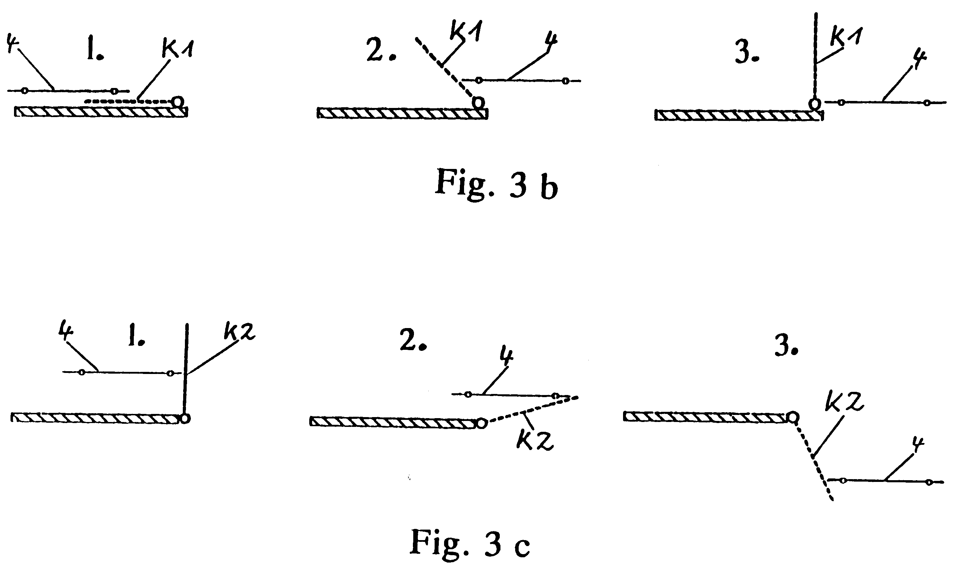

Fig. 3b zeigt drei Stellungen 1. bis 3. des Lötgutträgers 4 und der Abdichtklappe K1 beim Einfahren des Lötgutes.

Fig. 3c stellt drei Stellungen 1. bis 3. des Lötgutträgers 4 und der Abdichtklappe K2 beim Einfahren des Lötgutes dar.

Nach dem Lötvorgang erfolgt die Bewegung des Lötgutträgers 4 und der Abdichtklappen K1 und K2 in entgegengesetzter Richtung zur Ausgabe des Lötgutes.

In einer vereinfachten Ausführungsform kann an Stelle von zwei auch nur eine Abdichtklappe K2 zum Einsatz kommen. Diese ist geschlossen, wenn die Öffnungsklappe 2a offen ist, öffnet sich dann vor dem sich bewegenden Lötgutträger 4 und schließt sich beim Rücktransport wieder hinter ihm. Die Ausführungsform mit zwei Klappen K1, K2 ist jedoch bevorzugt, da der Zutritt von Lötdämpfen in den Bereich um die Öffnungsklappe 2 verhindert wird und somit die Lötmediumverluste noch stärker reduziert werden.

In einer weiteren nicht dargestellten erfindungsgemäßen Ausführungsform kann die Transportvorrichtung mit zwei Transporteinheiten und mit vier Abdichtklappen K1-K4 ausgebildet sein, um das Lötgut durch zwei verschiedene Öffnungen 2 ein- und auszufahren. Dabei übernimmt die zweite Transporteinheit den Lötgutträger 4 mit dem Lötgut nach dem Lötvorgang und transportiert ihn zur zweiten Öffnung. Die zusätzlich vorhandenen Abdichtklappen K3 und K4 sind analog zu den Abdichtklappen K1 und K2 vor der zusätzlichen Öffnung angeordnet.

Auch bei dieser Ausführungsform können in einer vereinfachten Ausführungsform anstelle von vier Abdichtklappen nur zwei Abdichtklappen zum Einsatz kommen.

Außerdem können im Bereich zwischen der oder den Öffnungsklappen 2a und der oder den Abdichtklappen K2 eine oder mehrere Vorrichtungen zum Abscheiden von entwichenem dampfförmigem Lötmedium angeordnet werden.

Im folgenden soll das Transportverfahren mittels der erfindungsgemäßen Transportvorrichtung mit den Abdichtklappen K1 und K2 anhand der Figuren 3a bis 3c näher erläutert werden.

Anfangs ist die Abdichtklappe K2 geschlossen und die Abdichtklappe K1 und die Öffnungsklappe 2a sind geöffnet. Der Lötgutträger 4 befindet sich in der Position 1. gemäß Fig. 3b. Das Lötgut wird auf dem Lötgutträger 4 angeordnet. Danach bewegt sich der Lötgutträger 4 in Richtung auf die Position 1. gemäß Fig. 3c. Die Öffnungsklappe 2a wird geschlossen, und die Klappe K1 bewegt sich der Bewegung des Lötgutträgers 4 folgend. Nach Erreichen der Position 1. gemäß Fig. 3c öffnet sich die Abdichtklappe K2 im Vorlauf vor der Bewegung des Lötgutträgers 4 bis zur Position 3. in Fig. 3c. Im weiteren Verlauf taucht der Lötgutträger 4 in den Mediumbehälter 3 ein, und es erfolgt der Lötvorgang. Nach Beendigung des Lötvorgangs wird der Lötgutträger 4 zurück bis zur geschlossenen Abdichtklappe K1 (Position 3. in Fig. 3b) bewegt, und die Abdichtklappe K2 bewegt sich im Anschluß an ihn in Richtung auf die Position 1. in Fig. 3c. Nach dem Öffnen der Abdichtklappe K1 fährt der Lötgutträger 4 in Richtung auf Position 1. in Fig. 3b und die Öffnung der Abdichtklappe K2 wird geschlossen, nachdem der Lötgutträger 4 sie durchfahren hat. Danach öffnet sich die Öffnungsklappe 2a und das gelötete Lötgut kann entnommen werden.

Bei einer nicht dargestellten erfindungsgemäßen Ausführungsform mit zwei Transporteinheiten und vier Abdichtklappen K1-K4 sind anfangs drei Abdichtklappen K1-K3 sowie die zweite Öffnungsklappe 2b geschlossen und die Klappe K1 und die erste Öffnungsklappe 2a sind geöffnet. Der Lötgutträger 4 wird mit dem Lötgut auf den Streben 6a und 6b lösbar befestigt. Danach erfolgt der analoge Vorgang wie bei nur einer Transporteinheit bis zur Beendigung des Lötvorgangs und dem Ausfahren des Lötgutträgers 4 aus dem Mediumbehälter 3. Anschließend übernehmen die Streben 6a und 6b der zweiten Transporteinheit den Lötgutträger 4 und bewegen ihn, gefolgt von der dritten Abdichtklappe K3 bis zur geschlossenen vierten Abdichtklappe K4. Diese wird geöffnet und nach dem Durchfahren des Lötgutträgers 4 durch die Öffnung der dritten Abdichtklappe K3 letztere geschlossen. Danach öffnet sich die zweite Öffnungsklappe 2b und das gelötete Lötgut kann entnommen werden.

Desweiteren ist es auch erfindungsgemäß mehrere Transportvorrichtungen hintereinander anzuordnen, um im In-line-Verfahren z.B. verschiedene Lötvorgänge in mehreren Dampfphasenlötanlagen auszuführen oder auch der Dampfphasenlötanlage Trockenphasen nachzuordnen. Durch einfache Umbaumaßnahmen ist die Anzahl der hintereinander angeordneten Transportvorrichtungen variierbar.

## Patentansprüche

1. Transportvorrichtung für eine Dampfphasenlötanlage, die ein Gehäuse (1), einen Mediumbehälter (3) und mindestens eine Öffnung (2) zum Beschicken und Ausgeben von Lötgut aufweist, mit:
a) einem Lötgutträger (4) und
b) einer Transporteinheit, gekennzeichnet durch:
b₁) eine um eine in der Transporteinheit ortsfeste Achse (7a) drehbare Strebe (6a), an der der Lötgutträger (4) drehbar befestigt ist,
b₂) ein an der Strebe (6a) angreifender Antrieb und
b₃) eine Stabilisiereinrichtung (6b, 7b) zum Parallelführen des Lötgutträgers (4) bei Verschwenken der Strebe (6a).

2. Transportvorrichtung nach Anspruch 1, dadurch gekennzeichnet, daß die Strebe und die Stabilisiereinrichtung als zwei vordere bzw. hintere parallele Streben (6a bzw. 6b) am vorderen bzw. hinteren Ende des Lötgutträgers (4) vorgesehen sind, die an dem Lötgutträger (4) über Lager (5a bzw. 5b) lösbar und drehbar befestigt sind,
wobei vorzugsweise das vordere Strebenpaar (6a) über eine Antriebswelle (7a) an seinem unterem Ende antreibbar ist und das hintere Strebenpaar (6b) um eine Lagerwelle (7b) an seinem unteren Ende drehbar ist, und
wobei der Lötgutträger (4) mit den vorderen und hinteren Streben (6a bzw. 6b) um die Antriebswelle (7a) und die Lagerachse (7b) so drehbar ist, daß die Ebene des Lötgutträgers (4) parallel versetzt wird.

3. Transportvorrichtung nach Anspruch 2, dadurch gekennzeichnet, daß die Streben (6a, 6b) als gerade Stäbe ausgebildet sind.

4. Transportvorrichtung nach Anspruch 2, dadurch gekennzeichnet, daß die Streben (6a, 6b) gebogen sind.

5. Transportvorrichtung nach einem der Ansprüche 1 bis 4, dadurch gekennzeichnet, daß die Transporteinheit auf einem Schlitten montiert und horizontal bewegbar ist.

6. Transportvorrichtung nach einem der Ansprüche 1 bis 5, gekennzeichnet durch eine Abdichtklappe (K2), die im Transportweg des Lötgütträgers (4) hinter der Öffnung (2) angeordnet ist und im geschlossenen Zustand den Transportweg verschließt.

7. Transportvorrichtung nach einem der Ansprüche 1 bis 5 mit einer ersten und einer zweiten Abdichtklappe (K1 bzw. K2),
wobei die erste und die zweite Abdichtklappe (K1 bzw. K2) nach der Öffnung (2) im Transportweg des Lötgutträgers (4) hintereinander angeordnet sind, und
wobei die Abdichtklappen (K1 und K2) im geschlossenen Zustand den Transportweg verschließen.

8. Transportvorrichtung nach einem der Ansprüche 1 bis 5, dadurch gekennzeichnet, daß die Transporteinheit mindestens zweifach als erste und zweite Transporteinheit vorgesehen ist, wobei die zweite Transporteinheit nach der ersten Transporteinheit und hinter dem Mediumbehälter (3) angeordnet ist und der Lötgutträger (4) von der zweiten Transporteinheit übernehmbar und zu einer zweiten Öffnung transportierbar ist.

9. Transportvorrichtung nach Anspruch 8, gekennzeichnet durch zwei Abdichtklappen (K2), die hinter der ersten Öffnung (2) bzw. vor der zweiten Öffnung (2) im Transportweg des Lötgutträgers (4) angeordnet sind und in geschlossenem Zustand den Transportweg (1) verschließen.

10. Transportvorrichtung nach Anspruch 8 mit einer ersten und bis vierten Abdichtklappe (K1 bis K4),
wobei die ersten und zweiten Abdichtklappen (K1 bzw. K2) hinter der ersten Öffnung (2) im Transportweg des Lötgutträgers hintereinander angeordnet sind,
die dritten und vierten Abdichtklappen im Transportweg des Lötgutträgers vor einer zweiten Öffnung hintereinander angeordnet sind, und
die Abdichtklappen im geschlossenen Zustand den Transportweg verschließen.

11. Transportvorrichtung nach einem der Ansprüche 1 bis 10, dadurch gekennzeichnet, daß zwischen der bzw. den Öffnung(en) (2) und der bzw. den Abdichtklappe(n) eine Vorrichtung zum Abscheiden von dampfförmigem Lötmedium vorgesehen ist.

12. Transportvorrichtung nach einem der Ansprüche 1 bis 11, dadurch gekennzeichnet, daß die Öffnungen (2) vorzugsweise durch Klappen (2a) abdichtend verschließbar sind.

13. Verfahren zum Betrieb einer Transportvorrichtung nach Anspruch 7, mit den Schritten:
a) Einfahren des Lötguts durch die Öffnung (2) auf den Lötgutträger (4) bei geöffneter erster Abdichtklappe (K1) und geschlossener zweiten Abdichtklappe (K2),
b) Bewegen des Lötgutträgers (4) durch die Öffnung der ersten Abdichtklappe (K1) bis zur zweiten Abdichtklappe (K2),
c) Schließen der Öffnung (2),
d) Öffnen der zweiten Abdichtklappe (K2),
e) Bewegen des Lötgutträgers (4) durch die Öffnung der zweiten Abdichtklappe (K2),
f) Schließen der ersten Abdichtklappe (K1) hinter dem Lötgutträger (4),
g) Bewegen des Lötgutträgers (4) bis zum Eintauchen in den Mediumbehälter (3),
h) Bewegen des Lötgutträgers (4) nach dem Lötvorgang zurück bis zur ersten Abdichtklappe (K1),
i) Öffnen der ersten Abdichtklappe (K1),
j) Bewegen des Lötgutträgers (4) durch die Öffnung der ersten Abdichtklappe (K1),
k) Schließen der zweiten Abdichtklappe (K2) hinter dem Lötgutträger (4) und
l) gegebenenfalls Öffnen der Öffnung (2) und Entnehmen des Lötguts.

14. Verfahren zum Betrieb einer Transportvorrichtung nach Anspruch 10 mit den Schritten:
a) Einfahren des Lötgutträgers (4) mit dem Lötgut durch die erste Öffnung (2) und Anordnen des Lötgutträgers (4) auf der ersten Transporteinheit, wobei die erste Abdichtklappe (K1) geöffnet ist und die zweite bis vierte Abdichtklappe (K2-K4) geschlossen sind,
b) Bewegen des Lötgutträgers (4) durch die Öffnung der ersten Abdichtklappe (K1) bis zur zweiten Abdichtklappe (K2),
c) gegebenenfalls Schließen der ersten Öffnung (2),
d) Öffnen der zweiten Abdichtklappe (K2),
e) Bewegen des Lötgutträgers (4) durch die Öffnung der zweiten Abdichtklappe (K2),
f) Schließen der ersten Abdichtklappe (K1) hinter dem Lötgutträger (4),
g) Öffnen der dritten Abdichtklappe (K3),
h) Bewegen des Lötgutträgers (4) bis zum Eintauchen in den Mediumbehälter (3),
i) Bewegen des Lötgutträgers (4) nach Beendigung des Lötvorgangs aus dem Mediumbehälter (3) heraus,
j) Übernahme des Lötgutträgers (4) durch die zweite Transporteinheit,
wobei der Verfahrensschritt j) entweder vor dem Schritt h), zwischen Schritt h) und i) oder nach Schritt i) erfolgen kann,
k) Bewegen des Lötgutträgers (4) durch die Öffnung der dritten Öffnungsklappe bis zur vierten Abdichtklappe (K4),
l) Öffnen der vierten Abdichtklappe (K4),
m) Bewegen des Lötgutträgers (4) durch die Öffnung der dritten Abdichtklappe (K3),
n) Schließen der dritten Abdichtklappe (K3) hinter dem Lötgutträger (4),
o) Öffnen der zweiten Öffnung und
p) Entnehmen des Lötgutträgers (4) mit dem gelöteten Lötgut.

## Claims

1. A transport device for a vapor-phase soldering equipment comprising a housing (1), a medium container (3) and at least one aperture (2) for loading and removing the part to be soldered, comprising
a) a support (4) for the part to be soldered, and
b) a transport unit characterized by:
b₁) a strut (6a) pivoting about an axis (7a) fixed in the transport unit, wherein the support (4) is hinged to the strut;
b₂) a drive which acts on the strut (6a), and
b₃) a stabilizing device (6b, 7b) to guide the support (4) in parallel when the strut (6a) pivots.

2. The transport device according to claim 1, characterized in that the strut and the stabilizing device respectively comprise two front and rear parallel struts (6a and 6b, respectively) which are positioned at the front and rear end of the support (4), respectively, and which are removably and pivotably fixed to said support (4) via bearings (5a and 5b, respectively),
preferably the front pair of struts (6a) being drivable via a drive shaft (7a) at its lower end and the rear pair of struts (6b) pivoting about a bearing shaft (7b) at its lower end, and
the support (4) together with the front and rear struts (6a and 6b, respectively) pivoting about the drive shaft (7a) and the bearing shaft (7b) in such a way that the plane of the support (4) is displaced in parallel.

3. The transport device according to claim 2, characterized in that the struts (6a, 6b) are formed as straight rods.

4. The transport device according to claim 2, characterized in that the struts (6a, 6b) are bent.

5. The transport device according to any one of claims 1 to 4, characterized in that the transport unit is mounted on a carriage and can be moved horizontally.

6. The transport device according to any one of claims 1 to 5, characterized by a sealing door (K2) which is located behind the aperture (2) in the transport path of the support (4) and closes the transport path in the closed state.

7. The transport device according to any one of claims 1 to 5 comprising a first and a second sealing door (K1 and K2, respectively),
the first and the second sealing door (K1 and K2, respectively) being located behind one another and behind the aperture (2) in the transport path of the support (4), and
the sealing doors (K1 and K2) closing the transport path in the closed state.

8. The transport device according to any one of claims 1 to 5, characterized in that the transport unit is provided at least in duplicate as first and second transport unit, wherein the second transport unit is located behind the first transport unit and behind the medium container (3) and the support (4) can be received by the second transport unit and transported to a second aperture.

9. The transport device according to claim 8, characterized by two sealing doors (K2) which are located behind the first aperture (2) and in front of the second aperture (2), respectively, in the transport path of the support (4) and close the transport path (1) in the closed state.

10. The transport device according to claim 8 comprising first to fourth sealing doors (K1 to K4),
the first and second sealing doors (K1 and K2, respectively) being located behind one another and behind the first aperture (2) in the transport path of said support,
the third and fourth sealing doors being located behind one another in the transport path of said support and in front of a second aperture, and
the sealing doors closing the transport path in the closed state.

11. The transport device according to any one of claims 1 to 10, characterized in that a device for precipitating vaporous soldering medium is provided between the aperture(s) (2) and the sealing door(s).

12. The transport device according to any one of claims 1 to 11, characterized in that the apertures (2) can be closed in a sealing manner preferably by doors (2a).

13. A process for operating a transport device according to claim 7, comprising the steps of:
a) conveying the part to be soldered through the aperture (2) onto the support (4) while the first sealing door (K1) is open and the second sealing door (K2) is closed,
b) moving the support (4) through the aperture of the first sealing door (K1) to the second sealing door (K2),
c) closing the aperture (2),
d) opening the second sealing door (K2),
e) moving the support (4) through the aperture of the second sealing door (K2),
f) closing the first sealing door (K1) behind the support (4),
g) moving the support (4) until it is immersed into the medium container (3),
h) moving the support (4) back to the first sealing door (K1) after the soldering process,
i) opening the first sealing door (K1),
j) moving the support (4) through the aperture of the first sealing door (K1),
k) closing the second sealing door (K2) behind the support (4), and
l) optionally opening the aperture (2) and removing the soldered part.

14. The process of operating a transport device according to claim 10 comprising the steps of:
a) conveying the support (4) with the part to be soldered through the first aperture (2) and arranging the support (4) on the first transport unit while the first sealing door (K1) is open and the second to fourth sealing doors (K2 to K4) are closed,
b) moving the support (4) through the aperture of the first sealing door (K1) to the second sealing door (K2),
c) optionally closing the first aperture (2),
d) opening the second sealing door (K2),
e) moving the support (4) through the aperture of the second sealing door (K2),
f) closing the first sealing door (K1) behind the support (4),
g) opening the third sealing door (K3),
h) moving the support (4) until it is immersed into the medium container (3),
i) removing the support (4) from the medium container (3) after the soldering process,
j) take-over of the support (4) by the second transport unit,
the process step j) being performed either before step h), between steps h) and i) or after step i),
k) moving the support (4) through the aperture of the third aperture door to the fourth sealing door (K4),
l) opening the fourth sealing door (K4),
m) moving the support (4) through the aperture of the third sealing door (K3),
n) closing the third sealing door (K3) behind the support (4),
o) opening the second aperture and
p) removing the support (4) with the soldered part.

## Revendications

1. Dispositif de manutention destiné à une installation de brasage en phase vapeur présentant un logement (1), un réservoir de milieu (3) et au moins une ouverture (2) pour l'amenée et l'évacuation du produit à braser, avec :
a) un support de produit à braser (4), et
b) une unité de manutention caractérisée par :
b₁) un étai (6a) à demeure dans l'unité de manutention et rotatif autour d'un axe (7a) et sur lequel est fixé de façon rotative le support de produit à braser,
b₂) un mécanisme d'entraînement s'engageant sur l'étai (6a), et
b₃) un dispositif de stabilisation (6b, 7b) pour le guidage parallèle du support de produit à braser (4) lors du basculement de l'étai (6a).

2. Dispositif de manutention selon la revendication 1, caractérisé en ce que l'étai et le dispositif de stabilisation sont prévus sous la forme de deux étais parallèles avant ou arrière (6a ou 6b) sur l'extrémité avant ou arrière du support de produit à braser (4) qui sont fixés de façon rotative et amovible sur le support de produit à braser (4) par l'intermédiaire de paliers (5a ou 5b),
de telle sorte que la paire d'étais avant (6a) peut être entraînée de préférence par un arbre d'entraînement (7a) sur son extrémité inférieure et la paire d'étais arrière (6b) peut être mise en rotation autour d'un tourillon (7b) sur son extrémité inférieure, et
de telle sorte que le support de produit à braser (4) peut être mis en rotation avec les étais avant et arrière (6a ou 6b) autour de l'arbre d'entraînement (7a) et du tourillon (7b), ce qui a pour résultat de décaler parallèlement le plan du support de produit à braser (4).

3. Dispositif de manutention selon la revendication 2, caractérisé en ce que les étais (6a, 6b) sont conçus sous forme de barres droites.

4. Dispositif de manutention selon la revendication 2, caractérisé en ce que les étais (6a, 6b) sont courbés.

5. Dispositif de manutention selon l'une des revendications 1 à 4, caractérisé en ce que l'unité de manutention est montée sur un chariot déplaçable horizontalement.

6. Dispositif de manutention selon l'une des revendications 1 à 5, caractérisé par une vanne (K2) qui est disposée dans le trajet de manutention du support de produit à braser (4) derrière l'ouverture (2) et qui bloque le trajet de manutention à l'état fermé.

7. Dispositif de manutention selon l'une des revendications 1 à 5, avec une première et une deuxième vannes (K1 ou K2),
de sorte que la première et la deuxième vannes (K1 ou K2) sont disposées après l'ouverture (2) dans le trajet de manutention du support de produit à braser (4) l'une derrière l'autre, et de sorte que les vannes (K1 et K2) bloquent le trajet de manutention à l'état fermé.

8. Dispositif de manutention selon l'une des revendications 1 à 5, caractérisé en ce que l'unité de manutention est constituée au moins en double sous forme de première et de seconde unités de manutention, de sorte que la deuxième unité de manutention est disposée après la première unité de manutention et derrière le réservoir de milieu (3) et le support de produit à braser (4) peut être repris par la deuxième unité de manutention pour être acheminé vers une seconde ouverture.

9. Dispositif de manutention selon la revendication 8, caractérisé en ce que les deux vannes (K2) sont disposées derrière la première ouverture (2) ou devant la deuxième ouverture (2) dans le trajet de manutention du support de produit à braser (4) et bloquent le trajet de manutention (1) à l'état fermé.

10. Dispositif de manutention selon la revendication 8, comportant une première et jusqu'à une quatrième vanne (K1 à K4),
de sorte que les premières et deuxièmes vannes (K1 ou K2) derrière la première ouverture (2) sont disposées l'une derrière l'autre dans le trajet de manutention du support de produit à braser,
la troisième et la quatrième vannes sont disposées dans le trajet de manutention du support de produit à braser l'une derrière l'autre avant une deuxième ouverture, et
les vannes bloquent le trajet de transport à l'état fermé.

11. Dispositif de manutention selon l'une des revendications 1 à 10, caractérisé en ce qu'entre la ou les ouverture(s) (2) et la ou les vanne(s), il est prévu un dispositif pour l'évacuation du milieu de brasage sous la forme vapeur.

12. Dispositif de manutention selon l'une des revendications 1 à 11, caractérisé en ce que les ouvertures (2) sont de préférence verrouillables hermétiquement par les vannes (2a).

13. Procédé pour l'exploitation d'un dispositif de manutention selon la revendication 7, comportant les étapes consistant à :
a) introduire le produit à braser par l'ouverture (2) sur le support de produit à braser (4) avec la première vanne (K1) ouverte et la seconde vanne (K2) fermée,
b) déplacer le support de produit à braser (4) par l'ouverture de la première vanne (K1) jusqu'à la deuxième vanne (K2),
c) fermer l'ouverture (2),
d) ouvrir la deuxième vanne (K2),
e) déplacer le support de produit à braser (4) à travers l'ouverture de la deuxième vanne (K2),
f) fermer la première vanne (K1) derrière le support de produit à braser (4),
g) déplacer le support de produit à braser (4) jusqu'à l'immersion dans le réservoir de milieu (3),
h) déplacer le support de produit à braser (4) après l'opération de brasage à nouveau vers la première vanne (K1),
i) ouvrir la première vanne (K1),
j) déplacer le support de produit à braser (4) à travers l'ouverture de la première vanne (K1),
k) fermer la seconde vanne (K2) derrière le support de produit à braser (4), et
l) éventuellement, ouvrir l'ouverture (2) et prélever le produit à braser.

14. Procédé pour l'exploitation d'un dispositif de manutention selon la revendication 10, comportant les étapes consistant à :
a) introduire le support de produit à braser (4) avec le produit à braser à travers la première ouverture (2) et disposer le support de produit à braser (4) sur la première unité de manutention, la première vanne (K1) étant ouverte et la deuxième jusqu'à la quatrième vannes (K2-K4) étant fermées,
b) déplacer le support de produit à braser (4) à travers l'ouverture de la première vanne (K1) jusqu'à la deuxième vanne (K2),
c) fermer éventuellement la première ouverture (2),
d) ouvrir la deuxième vanne (K2),
e) déplacer le support de produit à braser (4) à travers l'ouverture de la deuxième vanne (K2),
f) fermer la première vanne (K1) derrière le support de produit à braser (4),
g) ouvrir la troisième vanne (K3),
h) déplacer le support de produit à braser (4) jusqu'à l'immersion dans le réservoir de milieu (3),
i) sortir le support de produit à braser (4) à l'achèvement de l'opération de brasage du réservoir de milieu (3),
j) reprendre le support de produit à braser (4) par la deuxième unité de manutention,
l'étape j) pouvant s'effectuer soit avant l'étape h), entre l'étape h) et i) ou après l'étape i),
k) déplacer le support de produit à braser (4) à travers l'ouverture de la troisième vanne jusqu'à la quatrième vanne (K4),
l) ouvrir la quatrième vanne (K4),
m) déplacer le support de produit à braser (4) à travers l'ouverture de la troisième vanne (K3),
n) fermer la troisième vanne (K3) derrière le support de produit à braser (4),
o) ouvrir la deuxième ouverture, et
p) enlever le support de produit à braser (4) avec le produit à braser brasé.
